# EUROPÄISCHE PATENTSCHRIFT

(11) **EP 0 557 602 B1**
(45) Veröffentlichungstag und Bekanntmachung des Hinweises auf die Patenterteilung: **07.02.1996**
(21) Anmeldenummer: 92120883.1
(22) Anmeldetag: 08.12.1992
(51) Int. Cl.: A47J 43/08

(54) **Vielzweckküchenmaschine zum Bearbeiten von Nahrungsmitteln**
Multi-purpose food processor
Machine de cuisine à plusieurs fonctions pour travailler des produits alimentaires

(30) Priorität: 22.02.1992 DE 4205422
(43) Veröffentlichungstag der Anmeldung: 01.09.1993
(73) Patentinhaber: Braun Aktiengesellschaft, Frankfurt am Main (DE)
(72) Erfinder: Börger, Georg, W-6374 Steinbach (DE); Kamprath, Karl-Heinz, W-6200 Wiesbaden (DE)

(56) Entgegenhaltungen:
- DE-A- 3 843 703
- DE-B- 1 058 327
- FR-A- 1 287 551
- GB-A- 2 067 906

## Beschreibung

Die Erfindung betrifft eine Vielzweckküchenmaschine gemäß Öberbegriff des Anspruchs 1 zum Bearbeiten von Nahrungsmitteln mit einem Behälter, in dessen Behälterboden in einer Bohrung eine Lagerbuchse zur drehbaren Lagerung einer durch den Behälterboden durchgeführten Werkzeugwelle angeordnet ist, wobei das eine Ende der Werkzeugwelle über eine Kupplung mit einem Antriebsmotor und das andere Ende mit einem zum Bearbeiten der Nahrungsmittel aufsetzbaren Arbeitswerkzeug verbindbar ist. Solche Vielzweckküchenmaschinen werden zum Mischen, Rühren, Kneten, Raspeln, Schneiden, Entsaften, Schlagen usw. von Nahrungsmitteln eingesetzt und sind auch vielfach als Spezialmaschinen, wie Mixer, Saftzentrifuge verwendbar.

Eine ähnliche Haushaltsmaschine ist aus der DE-22 58 711 A1 bekannt. Zur Lagerung der Werkzeugwelle ist dort ein Preßsitz der Lagerbuchse, welche die Werkzeugwelle aufnimmt, In dem aus Kunststoff hergestellten Boden des Behälters vorgesehen. Während des Betriebes einer solchen Küchenmaschine wird durch Reibung zwischen der Werkzeugwelle und der Lagerbuchse eine erhebliche Wärmemenge erzeugt, was zu starken Verformungen im Bodenbereich des Behälters und damit zu Undichtigkeiten führen kann. Um diese thermischen Probleme zu beherrschen, ist bei der bekannten Küchenmaschine vorgesehen, daß die Werkzeugwelle aus einem speziellen Werkstoff mit besonders hoher Wärmeleitfähigkeit besteht, die darüber hinaus noch mit einer zusätzlichen Chromschicht mit besonders niedriger Rauhtiefe überzogen ist. Dies führt natürlich zu einem sehr hohen Material- und Fertigungsaufwand.

Ein weiterer Nachteil der bekannten Küchenmaschine ist, daß sämtliche Schwingungen der Werkzeugwelle über die Lagerbuchse unmittelbar in den Topf geleitet werden, was mit nicht unerheblichen Geräuschentwicklungen verbunden ist, zumal der Behälter als ausgezeichneter Resonanzkörper für die durch Körperschall übertragene Wellenschwingung fungiert. Auch die zweiteilige Anordnung von Behälter und Bodenteil mit der Lageranordnung führt zu einer erheblich aufwendigen Konstruktion, die mit hohen Kosten verbunden ist.

Aus der DE-A-38 43 703 ist weiterhin eine Küchenmaschine bekannt, bei der ein die äußere Abtriebswelle lagernder erster Rohransatz Teil des Gehäuses eines Getriebes bildet, das seinerseits im Gehäuse des Motorsockels befestigt ist und somit hierüber die Abtriebswelle führt. Eine am freien Ende eines zweiten Rohransatzes befestigte O-Ring-Dichtung liegt zum Zwecke der Abdichtung dichtend an dem freien Ende des ersten Rohransatzes an. Gleichzeitig greift das freie Ende des ersten Rohransatzes in eine Ringnut der mit der äußeren Abtriebswelle verbundenen Kupplungshülse ein, so daß die radiale Abstützung der Abtriebswelle über die Kupplungshülse und von dort auf den ersten Rohransatz erfolgt.

Der Erfindung liegt nunmehr die Aufgabe zugrunde, eine gattungsgemäße Vielzweckküchenmaschine zu schaffen, welche sich bei besonders kostengünstiger Herstellung frei von thermischen Problemen und den dadurch bedingten Unzulänglichkeiten zeigt. Darüber hinaus soll die Lagerung der Werkzeugwelle eine lästige Geräuschentwicklung erst gar nicht entstehen lassen.

Diese Aufgabe wird durch das Kennzeichen aus Anspruch 1 gelöst. Diese Lösung hat den Vorteil, daß beispielsweise durch Verkanten aufgebrachte Biegemomente elastische abgefedert und Spannungsspitzen abgebaut werden. Weiterhin läßt die Lagerbuchse sich leicht montieren, verhindert die Übertragung von Schwingungen auf den Behälter und ist geräuscharm.

Während bei bekannten Küchenmaschinen zur Vermeidung von thermischen Problemen im Bereich der Werkzeugwellenlagerung auf Glasbehälter oder auf Kunststoffbehälter mit integrierten Wärmeleitflächen zurückgegriffen wird, zeichnet sich eine Ausführungsform der Erfindung dadurch aus, daß der Behälter mit Boden und Dom, in dem die Lageranordnung ausgebildet ist, komplett aus Kunststoff besteht.

Bei einer besonders stabil ausgeführten Weiterbildung der Erfindung ist die Lagerbuchse innerhalb eines ringförmigen Domes angeordnet, der die Bohrung bildet. Dies gestattet außerdem eine einfache und sichere Montage. Dieser Dom, welcher insbesondere zentral im Behälterboden nach oben gezogen ist, bietet darüber hinaus den Vorteil, daß die Werkzeugwelle bzw. die Lagerung nur einer möglichst geringen Verschmutzung ausgesetzt ist. Auch wird das Aufsetzen des Werkzeuges auf die Werkzeugwelle erleichtert. Der Dom ermöglicht eine lange Führung der Lagerbuchse, so daß die beim Kneten auf die Werkzeugwelle übertragenen hohen Biegemomente problemlos im Behälter abgefangen werden, der wiederum fest auf dem Sockel der Vielzweckküchenmaschine montierbar ist. Die Dämpfung des elastischen Zwischenrings vermeidet schlagartige Stoßbelastungen.

Zur Vermeidung von lästigen Geräuschen durch die Übertragung von Schwingungen der Werkzeugwelle auf den Behälter, ist dafür gesorgt, daß zwischen der Lagerbuchse und dem Behälter kein direkter Kontakt besteht, sondern nur ein indirekter Kontakt über den elastischen Gummi- oder Kunststoffpuffer vorhanden ist. Dabei ist es vorteilhaft, daß zwischen der Lagerbuchse und der Bohrung ein über die gesamte Länge der Lagerbuchse verlaufender Ringraum ausgebildet ist, in den der elastische Zwischenring zwischen der Außenfläche der Lagerbuchse und der Bohrung eingespannt ist.

Eine besonders einfache und kostengünstige Ausführung bei Verwendung üblicher Normteile erhält man, wenn der elastische Zwischenring von zwei O-Ringen gebildet wird. Die O-Ringe lassen sich besonders leicht und schnell in der Bohrung montieren, auf die dann die Lagerbuchse unter Bildung einer radialen Spannung aufgezogen wird. Die Montage der elastischen Ringe läßt sich bei ihrer gleichzeitigen Lagesicherung dadurch erleichtern, daß an den endseitigen Außenflächen der Lagerbuchse je ein sich erweiternder konischer Abschnitt ausgebildet ist. Es ist aber auch denkbar, daß die Innenwandung des Domes für jeden O-Ring mindestens einen konisch sich verjüngenden Bereich aufweist, in dem der O-Ring anschlägt. Zur axialen Sicherung eines O-Ringes sind aber nicht nur diese Begrenzungen, sondern auch andere Anschläge, wie Stufen, denkbar.

Um Verschmutzungen von der Wellenlagerung fernzuhalten, ist bei einer Ausführungsform der Erfindung vorgesehen, daß zwischen der Werkzeugwelle und dem freien Ende des Domes an seiner Innenwandung ein Dichtmittel, insbesondere ein Radialwellendichtring, angeordnet ist.

Die Erfindung läßt sich auch dadurch weiterbilden, daß die Innenwandung und/oder die Lagerbuchse zumindest in dem Bereich, in dem sie von dem elastischen Zwischenring kontaktiert ist, mit mehreren am Umfang verteilten Nuten versehen ist. Dabei können die dadurch gebildeten Kanäle mittels einer Öffnung mit der Umgebung in Verbindung stehen. Durch die Kanäle wird eine besonders große Kühlfläche und daher gute Wärmeabfuhr aus dem die Lagerstelle einschließenden Bereich erzielt. Darüber hinaus kann auf diese Weise Feuchtigkeit, die beim Reinigen des Behälters in diesen Bereich eingetreten ist, schnell wieder ablaufen.

Die Lagerbuchse besteht vorzugsweise aus Sinterbronze, um deren Selbstschmierungs- und Notlaufeigenschaften zu nutzen.

Um die Lagerung frei von Axialbelastungen während des Betriebes der Vielzweckküchenmaschine zu halten, wird zur Weiterbildung der Erfindung vorgeschlagen, daß das erste Kupplungselement auf der Werkzeugwelle befestigt, vorzugsweise aufgeschrumpft ist und daß das erste Kupplungselement eine als Anschlag dienende Ringfläche aufweist, die an einer am freien Ende ausgebildeten Stirnfläche anschlägt. Dabei stützt sich die in der Lagerbuchse gleitend drehbar angeordnete Werkzeugwelle stets über das erste Kupplungselement am Dom ab.

Damit die Werkzeugwelle auch in axialer Richtung nach oben gesichert ist, wird vorgeschlagen, daß die Kupplung auf der Werkzeugwelle befestigt, vorzugsweise aufgeschrumpft ist und daß am Dom ein Bund als Anschlag ausgebildet ist, der mit einem an der Kupplung ausgebildeten Anschlag derart zusammenwirkt, daß bei abgestelltem Behälter ein Spiel (s) zwischen den Anschlägen vorhanden ist.

Eine besonders günstige Montage der Lagerung läßt sich dadurch erreichen, daß der Dom von einem mit dem Boden einteilig ausgebildeten Rohrabschnitt und einer auf diesem aufgesteckten Traghülse gebildet wird, also zweiteilig ausgeführt ist. Hierdurch läßt sich die Möglichkeit einer Vormontage bestimmter Einzelteile nutzen. Durch die zweiteilige Ausbildung des Domes kann für den Behälter mit dem Rohrabschnitt auch ein anderes Material gewählt werden, wie für die Traghülse. So kann die Traghülse aus einem Werkstoff höherer Festigkeit hergestellt werden und dient anschließend nach ihrem Aufsetzen auf dem Rohrabschnitt als zusätzliche Versteifung des Rohrabschnittes. Weiterhin kann die Traghülse aus einem undurchsichtigen Material hergestellt werden, während der Behälter mit dem Rohrabschnitt transparent ausgebildet ist. Hierbei dient die Traghülse als Sichtschutz für den Dom, so daß die inneren Bauteile, wie die O-Ringe, die Lagerbuchse und die Nuten bei Draufsicht auf den Behälter nicht sichtbar sind.

Weiterhin ist es vorteilhaft, daß die Traghülse etwa bis zum Fuß des Doms reicht und daß das freie Ende der Traghülse eine Verlängerung des Rohrabschnittes darstellt und mit einem Bohrungsabschnitt versehen ist, der konzentrisch zur Bohrung verläuft. Dadurch, daß sich an den Rohrabschnitt noch das freie Ende der Traghülse anschließt, wird der Dom zum Behälterinneren hin verlängert, wodurch der Platzbedarf der Lageranordnung beliebig erweitert werden kann, wenn eine entsprechend längere Traghülse aufgesetzt wird. Dies ist insbesondere dann von Vorteil, wenn gleiche Behälter mit verschiedenen Lageranordnungen verwendet werden sollen, die, je nach Einsatz, höhere oder geringere Lagerkräfte übertragen müssen. Auf die gleichen Behälter können somit unterschiedlich lange Traghülsen mit unterschiedlich langen Werkzeugwellen und Lagerbuchsen eingesetzt werden, die durch Vergrößerung des Abstandes der beiden O-Ringe zueinander zusätzlich noch eine höhere Tragfestigkeit erhalten, d.h., bei denjenigen Arbeitswerkzeugen, die besonders schwergängige Teige, wie Stollen, bearbeiten müssen, werden aufgrund der größer dimensionierten Lageranordnung die größeren Biegemomente leichter abgefangen.

Um den Abstand der beiden O-Ringe untereinander unabhängig von der Länge des Rohrabschnittes gestalten zu können, ist es vorteilhaft, daß sich am Bohrungsabschnitt des freien Endes der Traghülse der obere O-Ring abstützt. Hierdurch kann der obere O-Ring in der Traghülse abgestützt werden, wenn dies durch die sich beim Bearbeiten der Nahrungsmittel an der Werkzeugwelle ergebenden Querkräfte nötig wird.

Eine sichere Abstützung der Traghülse auf dem Rohrabschnitt wird dadurch erreicht, daß an der Traghülse Absätze vorgesehen sind, die an am Rohrabschnitt ausgebildeten Stufen anschlagen. Eine besonders innige und feste Verbindung der Traghülse auf dem Rohrabschnitt wird dadurch erreicht, daß die Absätze mit den Stufen verklebt, reib- oder ultraschallgeschweißt sind. Durch die Reibschweißung wird eine besonders innige Verbindung der Traghülse mit dem Rohrabschnitt erreicht, so daß nahezu die gleiche Festigkeit am Dom entsteht, als wenn er mit dem Behälter aus einem einzigen Formteil hergestellt wäre.

Es ist vorteilhaft, daß an der Außenfläche der Traghülse längs der Werkzeugwelle verlaufende Schlitze ausgebildet sind, die mit einem auf dem Kupplungselement aufsetzbaren Arbeitswerkzeug in Eingriff bringbar sind. Eine Abstützung des Arbeitswerkzeuges an der Traghülse ist allerdings nur bei denjenigen Arbeitswerkzeugen notwendig, die mit einem Getriebe versehen sind, wie es beispielsweise bei dem Knethaken der Fall ist, der in dem deutschen Patent P 37 18 161 beschrieben ist.

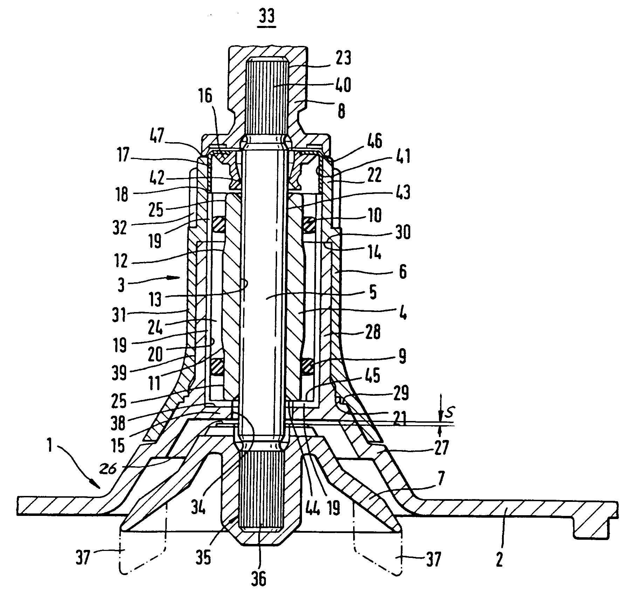

Weitere Vorteile sowie die Funktion der Erfindung ergeben sich aus nachstehender Beschreibung eines Ausführungsbeispiels anhand einer einzigen Zeichnung.

Hierzu zeigt die einzige Figur einen Teilschnitt durch das Zentrum eines erfindungsgemäßen Behälters für eine Vielzweckküchenmaschine.

In der Figur ist der Behälter 1 dargestellt, der vorzugsweise aus durchsichtigem Kunststoff gespritzt ist. Im Behälterboden 2 ist ein in den Behälter 1 hineinragender, zentral gelegener, ringförmiger Rohrabschnitt 28 ausgebildet, der an seiner Innenwandung 20 am unteren Ende einen Ringbund 15 aufweist. Der Ringbund 15 endet an einer Bohrung 34, die von der Werkzeugwelle 5 nach außen, also nach unten, durchdrungen wird. Das Ende 35 der Welle 5 ist mit einer Längsverzahnung 36 versehen, auf die eine erste Kupplung 7 drehfest aufgeschrumpft ist. Die erste Kupplung 7 weist nach unten gerichtete Mitnehmernocken 37 auf, die beim Aufsetzen des Behälters 1 auf einem Sockel (nicht dargestellt) einer Vielzweckküchenmaschine in drehfesten Eingriff mit einer weiteren Kupplungseinrichtung der Antriebswelle der Vielzweckküchenmaschine gelangen (nicht dargestellt).

Der Rohrabschnitt 28 weist an seiner Innenwandung längs der Werkzeugwelle 5 verlaufende Nuten 19 auf, die auch an der der Innenwandung 20 zugewandten Oberfläche 38 des als Ringbund 15 ausgebildeten ringförmigen Anschlages vorhanden sind. Am freien Ende des Rohrabschnittes 28 ist eine Stufe 30 ausgebildet, die als Anschlagfläche für einen an einer Traghülse 6 ausgebildeten ringförmigen Absatz 14 dient. Die zylindrische Außenfläche 39 des Rohrabschnittes 28 wird von der Traghülse 6 umgeben, die beispielsweise durch Reibschweißen, Kleben oder Ultraschallschweißen an den Absätzen 14 und 21 mit den entsprechend am Rohrabschnitt 28 ausgebildeten Stufen 30, 29 fest verbunden ist. Der Rohrabschnitt 28 bildet somit mit der aufgeschweißten Traghülse 6 den eigentlichen Dom 3 des Behälters 1.

An die obere Stufe 30 schließt sich an die Traghülse 6 ein das freie Ende 22 des Domes 3 bildender Abschnitt an, der konzentrisch zum Rohrabschnitt 28 verläuft. Auch das freie Ende 22 weist eine Bohrung auf, die zusammen mit der Bohrung im Rohrabschnitt 28 die eigentliche Bohrung 20 des Domes 3 bildet. Somit verlaufen auch die Nuten 19 in den Bohrungsabschnitt des freien Endes 22 hinein und sind mit den gleichen Abmessungen versehen.

Die Traghülse 6 ist aus einem undurchsichtigen Material, vorzugsweise Kunststoff, in passender Farbe zum Gehäuse der Vielzweckküchenmaschine ausgeführt und dient der optischen Abdeckung der hier dargestellten Lageranordnung.

Am freien Ende 22 der Traghülse 6 sind an der Außenfläche 31 längs verlaufende Schlitze 32 angebracht, die zur drehfesten Lagerung eines Arbeitswerkzeuges (nicht dargestellt) dienen, wenn dieses mit einem Getriebe versehen ist. Während sich also das Gehäuse des Arbeitswerkzeuges an den Schlitzen 32 abstützt, stützt sich die Antriebswelle des Arbeitswerkzeuges (nicht dargestellt) an einem am oberen Ende 23 der Werkzeugwelle 5 befestigten Kupplungselement 8 ab, das über eine Längsverzahnung 40 drehfest auf der Werkzeugwelle 5 aufgeschrumpft oder sonst wie befestigt ist.

Die Werkzeugwelle 5 ist in an sich bekannter Weise dauergeschmiert in der Lagerbuchse 4, die vorzugsweise aus Sinterbronze besteht, drehbar gelagert. Die Lagerbuchse 4 wiederum ist mittels zweier sie radial umgebender O-Ringe 9, 10 unter radialer Vorspannung im Rohrabschnitt 28 (untere Lagerung) einerseits und in der Traghülse 6 (obere Lagerung) andererseits elastisch aber ortsfest gehalten.

Die Lagerbuchse 4 weist hierzu an ihrer Außenfläche einen unteren und einen oberen sich konisch verjüngenden Bereich 11 und 12 auf, auf den der untere O-Ring 9 bzw. der obere O-Ring 10 aufgeschoben ist. Die erläuterte Konizität verhindert ein axiales Verschieben der Lagerbuchse 4 und erleichtert gleichzeitig die Montage. Der untere O-Ring 9 ist zwischen der unteren Außenfläche 25 der Lagerbuchse 4 und der Bohrung 20 des Domes 3 eingepreßt, während der obere O-Ring 10 zwischen der oberen Außenfläche 25 der Lagerbuchse 4 und der Innenwandung des oberen Abschnittes 22 der Traghülse 6 eingepreßt ist, so daß die Traghülse 6 und somit die Werkzeugwelle 5 auf dem Dom 3 im Behälter 1 elastisch zentriert gelagert sind. Der Abschnitt 22 wird durch den sich im Durchmesser erweiternden Absatz 14 begrenzt, der als Anlagefläche an die ringförmige Stirnseite der Stufe 30 des Rohrabschnittes 28 dient. Durch die beschriebene Lagerung besteht kein unmittelbarer Berührungskontakt zwischen der Lagerbuchse 4 und dem Dom 3 bzw. der Traghülse 6, sondern lediglich eine indirekte Verbindung über die O-Ringe 9 und 10.

In der abschließenden Bohrung 41 am oberen freien Ende 22 der Traghülse 6 ist ein Radialwellendichtring 16 eingepreßt, der mit seiner Dichtlippe 42 an der Außenfläche 43 der Werkzeugwelle 5 gleitend und dichtend anliegt.

Der Radialwellendichtring 16 schließt mit seiner Hülse 17 an der am Ende der Nuten 19 gebildeten Stufe 18 an. Eine gemäß der Zeichnung nach oben gerichtete Verschiebung der Werkzeugwelle 5 wird durch Anschlagen der Kupplung 7 über ihren Anschlag 26 am Bund 15 gestoppt. Im normalen Betriebszustand ist zwischen den Anschlägen 15 und 26 ein Spiel s vorhanden, da sich die Werkzeugwelle 5 über die am ersten Kupplungselement 8 ausgebildete Ringfläche 46 an der Stirnfläche 47 des oberen freien Endes 22 der Traghülse 6 abstützt. Die Ringfläche 44 der Lagerbuchse 4 schlägt an den von den Nuten 19 gebildeten einzelnen Stirnflächen 45 an. Es kann aber auch zwischen der Ringfläche 44 und dem Ringbund 15 ein Spiel vorhanden sein, da die Lagerbuchse 4 ohnehin von den O-Ringen 9, 10 im Dom 3 in axialer Richtung fixiert und ortsfest gehalten wird.

Die an der Innenwandung 20 des freien Endes 22 und des Rohrabschnittes 28 ausgebildeten Nuten 19 erhöhen einerseits die Kontaktkräfte der Preßverbindung durch höhere Flächenpressung und verbessern gleichzeitig durch eine große Oberfläche die Kühlung, so daß die Wärme- und auch die Wasserabfuhr aus dem Bereich der Lagerung erhöht wird. Zum einen wird nämlich der zwischen der Lagerbuchse 4 und den Nuten 19 liegende Ringraum 24 vergrößert und zum anderen bilden die Nuten 19 durchgängige Kanäle, durch welche einmal in den Ringraum 24, also zur Lagerstelle gelangte Feuchtigkeit, über die zwischen der Werkzeugwelle 5 und dem Bund 15 ausgebildete ringförmige Bohrung 34 ablaufen kann, von wo sie eingedrungen ist. Zwar könnte man auch die Bohrung 34 durch einen Radialwellendichtring, so wie er mit der Positionsnummer 16 am oberen Ende der Lagerstelle belegt ist, bestücken, dies hätte aber dann den Nachteil, daß, da derartige Behälter 1 zum Säubern auch in Geschirrspülmaschinen eingebracht werden, es dann nahezu unvermeidbar ist, daß nach mehreren Spülvorgängen dennoch Wasser in den Ringraum 24 eindringt, der dann nicht mehr ablaufen kann. Demnach wird ein Ein- und Auslaß an der Bohrung 34 geschaffen, der zwar beim Spülvorgang Spritzwasser nur unter höherem Druck in die Lagerstelle einfließen läßt, der aber dieses eingedrungene Spritzwasser genauso schnell wieder aus dem Lagerbereich abtropfen und austrocknen läßt.

Die zweiteilige Ausführung des Domes 3 durch den Rohrabschnitt 28 und die auf ihn aufgesetzte Traghülse 6 ermöglicht eine stabile und biegefeste Lagereinheit. Die Traghülse 6 wird mit ihrem den Rohrabschnitt 28 verlängernden freien Ende 22 so fest mit dem Rohrabschnitt 28 verklebt oder verschweißt, daß der Dom 3 eine mit dem Boden 2 des Behälters 1 stabile und feste Einheit ergibt. Die Traghülse 6 ermöglicht eine beliebige Verlängerung des Domes 3 zum Behälterinneren 33 hin, so daß, je nachdem, wie hoch die Lagerbelastungen in der Lagereinheit sind, diese entsprechend lang oder kürzer ausgebildet sein kann.

So ist es auch durchaus denkbar, daß die Lageranordnung ohne die Traghülse 6 auskommt, wenn der gleiche Behälter mit geringeren Lagerbelastungen verwendet werden soll. Dabei wird dann der obere O-Ring 10 in der Innenwandung 20 des Rohrabschnittes 28 selbst eingesetzt und der Radialwellendichtring 16 schließt sich an den O-Ring 10 im oberen Ende der Innenwandung 20 des Rohrabschnittes 28 an. Hierbei sind selbstverständlich die Länge der Lagerbuchse 4 und der Werkzeugwelle 5 wesentlich kürzer gewählt, was zur Folge hat, daß diese Lageranordnung auch nur mit geringeren Querkräften belastet werden kann. Die Traghülse 6 erlaubt also bei gleicher Ausbildung des Behälters 1 mit seinem Rohrabschnitt 28 auch längere Lagergrößen.

Die Montage wird wie folgt durchgeführt:
Wird eine Traghülse 6 verwendet, so wird sie vor Montage der Lageranordnung 4, 5, 9, 10, 16, beispielsweise durch Ultraschallverschweißen, Kleben oder ähnliche Befestigungsmittel, fest mit dem Rohrabschnitt 28 verbunden. Anschließend wird der untere O-Ring 9 in die Innenwandung 20 des Rohrabschnittes 28 eingesetzt und die Lagerbuchse 4 mit ihrer Außenfläche 25 auf den O-Ring 9 gezogen, bis ihre Ringfläche 44 an der Stirnfläche 45 des Bundes 15 anschlägt. Aufgrund des an der Lagerbuchse 4 ausgebildeten konischen Abschnittes 11 muß der O-Ring 9 gemäß der Zeichnung immer unterhalb dieses konischen Abschnittes 11 liegen, da dieser wie eine Stufe auf den O-Ring 9 einwirkt, wenn die Lagerbuchse 4 eingesetzt wird.

Anschließend wird mittels eines ringförmigen Hilfswerkzeuges der obere O-Ring 10 auf die Lagerbuchse 4 aufgeschoben, bis er die in der Figur dargestellte Stellung einnimmt, d.h., bis er durch den konischen Abschnitt 12 in seiner Bewegung gehindert wird. Nun wird der Radialwellendichtring 16 in die Bohrung 41 eingesetzt.

Anschließend wird die bereits mit der Kupplung 7 versehene Werkzeugwelle 5 gemäß der Figur von unten her in die Paßbohrung 13 eingeschoben, bis die Längsverzahnung 40, die in der Zeichnung angezeigte Stellung einnimmt. Im letzten Arbeitsgang wird schließlich das Kupplungselement 8 auf die Längsverzahnung 40 aufgeschrumpft, wodurch die an dem Kupplungselement 8 ausgebildete Ringfläche 46 an der am freien Ende 22 der Traghülse 6 ausgebildeten Stirnfläche 47 anschlägt, so daß zwischen den Anschlägen 15, 26 ein Spiel s entsteht. Somit ist die Werkzeugwelle 5 auf dem Dom 3 in axialer Richtung sowohl nach unten wie nach oben gesichert. Die Lagerbuchse 4 wird durch die zwischen der Lagerbuchse 4 und der Innenwandung 20 eingepreßten O-Ringe 9, 10 in der in der Figur dargestellten Stellung ortsfest gehalten.

Wird der Behälter 1 auf die in der Zeichnung nicht dargestellte Antriebseinheit einer Vielzweckküchenmaschine aufgesetzt, so greifen die Mitnehmernocken 37 der Kupplung 7 in die an der Antriebswelle entsprechend ausgebildete Kupplung ein. Gleichzeitig stützt sich der Boden 2 des Behälters 1 auf dem Gerätesockel der Vielzweckküchenmaschine ab, so daß aufgrund der gegebenen Abmessungen keine Axialkräfte auf die Kupplung 7 übertragen werden. Wird nun auf das Kupplungselement 8 ein in der Zeichnung nicht dargestelltes Arbeitswerkzeug zum Behandeln von Nahrungsmitteln aufgesetzt, und die Vielzweckküchenmaschine eingeschaltet, so wird die Werkzeugwelle 5 über die Kupplung 7 in Drehung versetzt. Da die Kupplung 8 drehfest mit der Werkzeugwelle 5 und ebenso drehfest mit dem nicht dargestellten Arbeitswerkzeug verbunden ist, dreht sich das Arbeitswerkzeug und verrührt, verknetet oder bearbeitet in sonstiger Weise die im Behälter 1 befindlichen oder eingegebenen Nahrungsmittel. Die vom Arbeitswerkzeug auf die Kupplung einwirkenden, in der Zeichnung nach unten gerichteten Axialkräfte werden, falls nötig, über die Ringfläche 46 auf die Stirnfläche 47 der Traghülse 6 übertragen, während die Radialkräfte elastisch über die O-Ringe 9, 10 auf den Dom 3 und von dort über den Boden 2 zum Behälter 1 übertragen werden, der sich wiederum auf einen nicht dargestellten Gerätesockel der Vielzweckküchenmaschine abstützt.

## Patentansprüche

1. Vielzweckküchenmaschine zum Bearbeiten von Nahrungsmitteln mit einem Behälter (1), in dessen Behälterboden (2, 3) in einer Bohrung (20) eine Lagerbuchse (4) zur drehbaren Lagerung einer durch den Behälterboden (2, 3) durchgeführten Werkzeugwelle (5) angeordnet ist, wobei das eine Ende (35) der Werkzeugwelle (5) über eine Kupplung (7) mit einem Antriebsmotor und das andere Ende (23) über ein Kupplungselement (8) mit einem zum Bearbeiten der Nahrungsmittel aufsetzbaren Arbeitswerkzeug verbindbar ist, wobei die Lagerbuchse (4) mittels mindestens eines elastischen Zwischenringes (9, 10), der die Lagerbuchse (4) radial umgibt, in der Bohrung (20) des Behälterbodens (2, 3) befestigt ist
**dadurch gekennzeichnet**,
daß der oder die elastischen Zwischenringe (9, 10) die einzige Verbindung von der Lagerbuchse (4) zum Behälter (1) herstellen.

2. Vielzweckküchenmaschine nach Anspruch 1,
**dadurch gekennzeichnet**,
daß der Behälter (1) mit dem Behälterboden (2) einteilig aus Kunststoff besteht, in dem die Bohrung (20) ausgebildet ist.

3. Vielzweckküchenmaschine nach einem der vorhergehenden Ansprüche,
**dadurch gekennzeichnet**,
daß die Lagerbuchse (4) innerhalb eines im Behälterboden (2) angeordneten ringförmigen Domes (3) gelagert ist, in dem die Bohrung (20) ausgebildet ist.

4. Vielzweckküchenmaschine nach einem der vorhergehenden Ansprüche,
**dadurch gekennzeichnet**,
daß zwischen der Lagerbuchse (4) und der Bohrung (20) ein über die gesamte Länge der Lagerbuchse (4) verlaufender Ringraum (24) ausgebildet ist, in dem der elastische Zwischenring (9, 10) zwischen der Außenfläche (25) der Lagerbuchse (4) und der Bohrung (20) eingespannt ist.

5. Vielzweckküchenmaschine nach Anspruch 4,
**dadurch gekennzeichnet**,
daß der elastische Zwischenring von zwei O-Ringen (9, 10) gebildet wird.

6. Vielzweckküchenmaschine nach Anspruch 5,
**dadurch gekennzeichnet**,
daß die Außenfläche der Lagerbuchse (4) zwei sich erweiternde konische Abschnitte (11, 12) aufweist, die zwischen den beiden O-Ringen (9, 10) an der Lagerbuchse (4) ausgebildet sind.

7. Vielzweckküchenmaschine nach Anspruch 5,
**dadurch gekennzeichnet**,
daß die Innenwandung (20) des Domes (3) für jeden O-Ring (9, 10) mindestens einen konisch sich verjüngenden Bereich aufweist.

8. Vielzweckküchenmaschine nach einem der vorhergehenden Ansprüche,
**dadurch gekennzeichnet**,
daß zwischen der Werkzeugwelle (5) und dem freien Ende (22) des Domes (3) an seiner Innenwandung (20) ein Dichtmittel, insbesondere ein Radialwellendichtring (16), angeordnet ist.

9. Vielzweckküchenmaschine nach einem der vorhergehenden Ansprüche,
**dadurch gekennzeichnet**,
daß die Innenwandung (20) und/oder die Lagerbuchse (4) zumindest in dem Bereich, in dem sie von dem elastischen Zwischenring (9, 10) kontaktiert ist, mit mehreren am Umfang verteilten Nuten (19) versehen ist.

10. Vielzweckküchenmaschine nach einem der vorhergehenden Ansprüche,
**dadurch gekennzeichnet,**
daß die Lagerbuchse (4) aus Sinterbronze besteht.

11. Vielzweckküchenmaschine nach Anspruch 3,
**dadurch gekennzeichnet,**
daß das erste Kupplungselement (8) auf der Werkzeugwelle (5) befestigt, vorzugsweise aufgeschrumpft ist und daß das erste Kupplungselement (8) eine als Anschlag dienende Ringfläche (46) aufweist, die an einer am freien Ende (22) des Domes (3) ausgebildeten Stirnfläche (47) anschlägt.

12. Vielzweckküchenmaschine nach Anspruch 2,
**dadurch gekennzeichnet,**
daß die Kupplung (7) auf der Werkzeugwelle (5) befestigt, vorzugsweise aufgeschrumpft ist und daß am Dom (3) ein Bund (15) als Anschlag ausgebildet ist, der mit einem an der Kupplung (7) ausgebildeten Anschlag (26) derart zusammenwirkt, daß bei abgestelltem Behälter (1) ein Spiel (s) zwischen den Anschlägen (15, 26) vorhanden ist.

13. Vielzweckküchenmaschine nach Anspruch 12,
**dadurch gekennzeichnet,**
daß der Dom (3) von einem mit dem Boden (2) einteilig ausgebildeten Rohrabschnitt (28) und einer auf diesem aufgesteckten Traghülse (6) gebildet wird.

14. Vielzweckküchenmaschine nach Anspruch 13,
**dadurch gekennzeichnet,**
daß die Traghülse (6) etwa bis zum Fuß (27) des Doms (3) reicht und daß das freie Ende (22) der Traghülse (6) eine Verlängerung des Rohrabschnittes (28) bildet und mit einem Bohrungsabschnitt (13) versehen ist, der konzentrisch zur Bohrung (20) verläuft.

15. Vielzweckküchenmaschine nach Anspruch 13,
**dadurch gekennzeichnet,**
daß sich am Bohrungsabschnitt (13) des freien Endes (22) der Traghülse (6) der obere O-Ring (10) abstützt.

16. Vielzweckküchenmaschine nach Anspruch 13,
**dadurch gekennzeichnet,**
daß an der Traghülse (6) Absätze (14, 21) vorgesehen sind, die an am Rohrabschnitt (28) ausgebildeten Stufen (30, 29) anschlagen.

17. Vielzweckküchenmaschine nach Anspruch 15,
**dadurch gekennzeichnet,**
daß die Absätze (14, 21) mit den Stufen (30, 29) verklebt oder reibgeschweißt sind.

18. Vielzweckküchenmaschine nach Anspruch 13,
**dadurch gekennzeichnet,**
daß an der Außenfläche (31) der Traghülse (6) längs der Werkzeugwelle (5) verlaufende Schlitze (32) ausgebildet sind, die mit einem auf dem Kupplungselement (8) aufsetzbaren Arbeitswerkzeug in Eingriff bringbar sind.

## Claims

1. A multi-purpose kitchen apparatus for processing foods, with a container (1) having arranged in a bore (20) in the container bottom (2, 3) a bearing sleeve (4) in which a tool shaft (5) extending through the container bottom (2, 3) is journalled for rotary movement therein, with the one end (35) of the tool shaft (5) being adapted to be connected with a drive motor through a coupling means (7), while the other (23) end is adapted be connected through a coupling member (8) with a processing tool for processing the foodstuffs, with the bearing sleeve (4) being secured within the bore (20) of the container bottom (2, 3) by means of at least one resilient intermediate ring (9, 10) radially surrounding the bearing sleeve (4),
**characterized in that** the resilient intermediate ring or rings (9, 10) establish(es) the sole connection from the bearing sleeve (4) to the container (1).

2. The multi-purpose kitchen apparatus as claimed in claim 1,
**characterized in that** the container (1) including the container bottom (2) in which the bore (20) is provided is integrally formed of plastic material.

3. The multi-purpose kitchen apparatus as claimed in any one of the preceding claims,
**characterized in that** the bearing sleeve (4) is carried within an annular dome (3) arranged in the container bottom (2) in which the bore (20) is provided.

4. The multi-purpose kitchen apparatus as claimed in any one of the preceding claims,
**characterized in that** an annular chamber (24) extending over the entire length of the bearing sleeve (4) is provided between the bearing sleeve (4) and the bore (20), with the resilient intermediate ring being (9, 10) being tensioned between the outer surface (25) of the bearing sleeve (4) and the bore (20).

5. The multi-purpose kitchen apparatus as claimed in claim 4,
**characterized in that** the resilient intermediate ring is formed by two O-rings (9, 10).

6. The multi-purpose kitchen apparatus as claimed in claim 5,
**characterized in that** the outer surface of the bearing sleeve (4) includes two conically diverging sections (11, 12) formed between the two O-rings (9, 10) on the bearing sleeve (4).

7. The multi-purpose kitchen apparatus as claimed in claim 5,
**characterized in that** the inside wall (20) of the dome (3) has for each O-ring (9, 10) at least one conically tapering section.

8. The multi-purpose kitchen apparatus as claimed in any one of the preceding claims,
**characterized in that** a sealing means, in particular a rotary shaft lip seal (16), is provided between the tool shaft (5) and the free end (22) of the dome (3) on its inside wall (20).

9. The multi-purpose kitchen apparatus as claimed in any one of the preceding claims,
**characterized in that** the inside wall (20) and/or the bearing sleeve (4) are provided with several circumferentially spaced grooves (19) at least in the area in which they make contact with the resilient intermediate ring (9, 10).

10. The multi-purpose kitchen apparatus as claimed in any one of the preceding claims,
**characterized in that** the bearing sleeve (4) is made of sintered bronze.

11. The multi-purpose kitchen apparatus as claimed in claim 3,
**characterized in that** the first coupling member (8) is secured to the tool shaft (5), preferably by shrinking it thereon, and the first coupling member (8) is provided with an annular surface (46) serving as a stop abutting against an end surface (47) formed at the free end (22) of the dome (3).

12. The multi-purpose food processor as claimed in claim 2, **characterized in that** the coupling means (7) is secured to the tool shaft (5), preferably by shrinking it thereon, and a collar (15) serving as a stop is provided on the dome (3), which collar cooperates with an abutment stop (26) provided on the coupling means (7) such that a clearance (s) exists between the stops (15, 26) with the container (1) seated in place.

13. The multi-purpose food processor as claimed in claim 12, **characterized in that** the dome (3) is constructed of a tubular section (28) integrally formed with the bottom (2), and of a carrying sleeve (6) installed on said tubular section.

14. The multi-purpose food processor as claimed in claim 13, **characterized in that** the carrying sleeve (6) extends approximately up to the base (27) of the dome (3), and the free end (22) of the carrying sleeve (6) constitutes an extension of the tubular section (28) and is provided with a bore section (13) extending concentrically with the bore (20).

15. The multi-purpose kitchen apparatus as claimed in claim 13,
**characterized in that** the upper O-ring (10) bears against the bore section (13) of the free end (22) of the carrying sleeve (6).

16. The multi-purpose kitchen apparatus as claimed in claim 13,
**characterized in that** the carrying sleeve (6) is provided with shoulders (14, 21) abutting against respective steps (30, 29) formed on the tubular section (28).

17. The multi-purpose kitchen apparatus as claimed in claim 15,
**characterized in that** the shoulders (14, 21) are connected with the steps (30, 29) by adhesive bonding or friction welding.

18. The multi-purpose kitchen apparatus as claimed in claim 13,
**characterized in that** the outer surface (31) of the carrying sleeve (6) is provided with slots (32) extending longitudinally of the tool shaft (5) and suitable for engagement with a processing tool seatable on the coupling member (8).

## Revendications

1. Robot ménager pour travailler des aliments, comprenant un récipient (1) dans le fond (2,3) duquel un coussinet (4) est disposé dans un perçage (20) pour le montage rotatif d'un arbre porte-outil (5) traversant le fond (2,3) du récipient, une extrémité (35) de l'arbre porte-outil (5) pouvant être reliée par un accouplement (7) à un moteur d'entraînement et l'autre extrémité (23) pouvant être reliée par un élément d'accouplement (8) à un outil de travail à mettre en place sur cette extrémité et servant à travailler les aliments, le coussinet (4) étant fixé dans le perçage (20) du fond (2, 3) du récipient par au moins une bague élastique intermédiaire (9, 10) qui entoure radialement le coussinet (4),
caractérisé en ce que
la ou les bagues élastiques intermédiaires (9, 10) établissent la seule liaison entre le coussinet (4) et le récipient (1).

2. Robot ménager selon la revendication 1, caractérisé en ce que le récipient (1) et le fond (2) sont réalisés en une seule pièce en matière plastique, dans laquelle est réalisé le perçage (20).

3. Robot ménager selon une des revendications précédentes, caractérisé en ce que le coussinet (4) est monté à l'intérieur d'un dôme annulaire (3) agencé dans le fond (2) du récipient et dans lequel est réalisé le perçage (20).

4. Robot ménager selon une des revendications précédentes, caractérisé en ce qu'un espace annulaire (24), s'étendant sur toute la longueur du coussinet (4), est formé entre ce coussinet et le perçage (20), espace dans lequel la bague élastique intermédiaire (9, 10) est serrée entre la surface extérieure (25) du coussinet (4) et le perçage (20).

5. Robot ménager selon la revendication 4, caractérisé en ce que la bague élastique intermédiaire est constituée de deux joints toriques (9, 10).

6. Robot ménager selon la revendication 5, caractérisé en ce que la surface extérieure du coussinet (4) présente deux portions coniques (11, 12) qui s'élargissent et sont formées entre les deux joints toriques (9, 10) sur le coussinet (4).

7. Robot ménager selon la revendication 5, caractérisé en ce que la paroi intérieure (20) du dôme (3) présente au moins une zone qui se rétrécit coniquement pour chaque joint torique (9, 10).

8. Robot ménager selon une des revendications précédentes, caractérisé en ce qu'un moyen d'étanchéité, en particulier une bague d'étanchéité à lèvre et ressort (16), est disposé entre l'arbre porte-outil (5) et l'extrémité libre (22) du dôme (3) sur la paroi intérieure (20) de ce dernier.

9. Robot ménager selon une des revendications précédentes, caractérisé en ce que la paroi intérieure (20) et/ou le coussinet (4) est pourvu de plusieurs rainures (19) réparties sur la périphérie, tout au moins dans la zone où cette paroi et/ou ce coussinet est en contact avec la bague élastique intermédiaire (9, 10).

10. Robot ménager selon une des revendications précédentes, caractérisé en ce que le coussinet (4) est en bronze fritté.

11. Robot ménager selon la revendication 3, caractérisé en ce que le premier élément d'accouplement (8) est fixé sur l'arbre porte-outil (5), de préférence par frettage, et que ce premier élément d'accouplement (8) présente une face annulaire (46) servant de butée et venant s'appliquer contre une face d'extrémité (47) formée à l'extrémité libre (22) du dôme (3).

12. Robot ménager selon la revendication 2, caractérisé en ce que l'accouplement (7) est fixé sur l'arbre porte-outil (5), de préférence par frettage, et que le dôme (3) est pourvu d'un collet (15) servant de butée, qui coopère avec une butée (26) formée sur l'accouplement (7) de manière qu'un jeu (s) subiste entre les butées (15, 26) lorsque le récipient (1) est retiré de la partie restante du robot.

13. Robot ménager selon la revendication 12, caractérisé en ce que le dôme (3) est composé d'une partie tubulaire (28) réalisée d'un seul tenant avec le fond (2) et d'un manchon de soutien (6) emboîté sur cette partie tubulaire.

14. Robot ménager selon la revendication 13, caractérisé en ce que le manchon de soutien (6) s'étend à peu près jusqu'au pied (27) du dôme (3) et que l'extrémité libre (22) du manchon de soutien (6) forme un prolongement de la partie tubulaire (28) et est pourvue d'une partie de perçage (13 concentrique au perçage (20) du fond du récipient.

15. Robot ménager selon la revendication 13, caractérisé en ce que le joint torique supérieur (10) s'appuie dans la partie de perçage (13) formée par l'extrémité libre (22) du manchon de soutien (6).

16. Robot ménager selon la revendication 13, caractérisé en ce que le manchon de soutien (6) est pourvu d'épaulements (14, 21) s'appliquant contre des gradins (30, 29) formés sur la partie tubulaire (28).

17. Robot ménager selon la revendication 15, caractérisé en ce que les épaulements (14, 21) et les gradins (30, 29) sont assemblés par collage ou soudage par friction.

18. Robot ménager selon la revendication 13, caractérisé en ce que des fentes (32) sont formées dans la surface extérieure (31) du manchon de soutien (6), fentes qui s'étendent le long de l'arbre porte-outil (5) et peuvent être amenées en prise avec un outil de travail à mettre en place sur l'élément d'accouplement (8).
